# EUROPEAN PATENT APPLICATION

(11) **EP 4 040 608 A1**
(43) Date of publication of application: **10.08.2022**
(21) Application number: 22155310.0
(22) Date of filing: 07.02.2022
(51) Int. Cl.: H01R 13/516, F25D 23/06, H01R 13/58, H01R 13/74, H02G 3/22, H01R 13/52, H01R 13/502

(54) **FOAM PROTECTIVE SHELL FOR REFRIGERATOR CONNECTORS**

(30) Priority: 08.02.2021 IT 202100002711
(71) Applicant: TE Connectivity Italia Distribution S.r.l., 10093 Collegno (TO) (IT); TE Connectivity Solutions GmbH, 8200 Schaffhausen (CH)
(72) Inventor: PAI, Rajendra, 560066 Bangalore (IN); MUTHUPANDI, Deepan Ponraj, 560066 Bangalore (IN); ROLFO, Piero, 78636 TORINO (IT); ANTONACCI, Stefano, 78636 TORINO (IT); LONGO, Fabrizio, 78636 TORINO (IT)
(74) Representative: Grünecker Patent- und Rechtsanwälte PartG mbB

(57) **Abstract**

Connector assembly (100) for use in house appliance applications configured to be installed on a wall (300) having an outer side (301) and an inner side (302) opposite to that outer side (301) comprising a main connector body (101) that may be introduced into a cut-out hole (303) of said wall (300) along a direction (X1); a protective shell (200) that may be positioned on the inner side (302) of said wall (300) configured to protect the main connector body (101) from insulation foam entering the main connector body (101) when the protective shell (200) and the main connector body (101) are foamed in place, comprising a receptable (203) formed at a front portion (201) of the protective shell (200) configured to receive the second end (103) of the main connector body (101); a flange (204) extending from and surrounding the receptacle (203) that may be attached to the wall on the inner side (302) for covering the cut-out hole (303) of said wall (300); a lead-through channel (205) formed at a back portion (202) of the protective shell (200); wherein the lead-through channel (205) has one or more internal flaps (206) for routing cables (217) of the connector through the back portion (202) of the shell (200) in a meandering manner, which one or more flaps (206) are inclined with respect to the lead-through channel (205).

## Description

### TECHNICAL FIELD OF THE INVENTION

The present invention relates to a connector assemblies to be installed on a wall, and in which a shell encapsulates the connector and offers protection against insulation foam from entering the connector and terminal interface area when the shell and the connector are foamed in place.

### BACKGROUND OF THE INVENTION

In the appliance industry, a plurality of connectors assemblies are used for mounting connectors on a wall and providing a connection between elements arranged on one side of the wall with elements provided on the other side of the wall. Those elements are often then sprayed with foam insulation material.

EP1710874A discloses a device for fixing a wire harness in an inner liner of a refrigerator filled with insulation foam. The device includes a housing for receiving wire and harness terminals inserted thereto. The housing has one end inserted and fixed with latches to a fixing hole formed in the inner liner. A deformable cover integrally formed at a middle portion of the housing extends radially therefrom at an angle and covers the fixing hole in order to prevent the insulation foam from leaking to the outside of the inner liner through a gap between the housing and the fixing hole. A cap member is attached to another end of the housing inside the inner liner. The cap member comprises a pair of hinge couplers connected throug narrow sections to the cap member. Soft sealing members surround the wire harness further preventing a leakage of the insulation foam, when the hinge couplers are pivoted towards and latched to each other. The main advantage of such a system when compared to other more conventional systems is that based on his construction leakage of the foam insulation material to the outside of the inner liner of the refrigerator is prevented. However, the main disadvantage is that the foam insulation material can still accidentally enter the body portion accommodating the wires, inside the cap and if this is the case there is the risk that the foam solidifies around the wires making impossible to perform any maintenance work and wire replacement.

Additional solutions in the market, foresee the use of tapes or adhesives, such as hotmelt, to seal the gaps between the housing and the inner liner, but those systems are difficult to assemble and to install.

The WO2008025647 relates to a backing part, which is mountable on a foam side of a refrigerator wall for positioning electrical contacts, e.g. of a switch or other electrical components, relative to a window cut out in the wall. The backing part comprises a front housing and a rear housing monolithically connected by a neck section. The front housing is surrounded by a circumferential sealing lip, which is pressed against an end face of the wall. Further, a plurality of ribs and pins protrudes from the front housing and engages with windows cut out in a horizontal leg of the wall for securing the backing part. The rear housing is constructed from a lower part and a lid monolithically connected via film hinges. The lid carries a plurality of latching hooks, which engage with latching eyelets on the lower part of the rear housing. According to one aspect, an electrical cable extends through a labyrinth centrally-located chamber of the rear housing, in which the cable is forced to meander past alternately projecting transverse webs. The labyrinth chamber prevents ingress of foam into via the cable, the cable is preferably routed through a labyrinth multiply curved chamber. Around the labyrinth chamber there are on the front side of the backing piece also auxiliary chambers. These auxiliary chambers are chambers in which the foam, which may penetrate accidentally, can expand, before it penetrates and reaches the centrally-located chamber. The further advance to the central chamber may be inhibited, if not stopped. This system has the disadvantage of having a very complex geometry, which is designed to fit specific set of cables and electrical contacts. Also the penetration of foam may not completely be prevented.

### SUMMARY OF THE INVENTION

Is therefore an object of the invention to provide a connector assembly system overcoming the above mentioned and other problems. The invention is based on the idea of providing a connector assembly for an a house appliance which is configured in such a way to reduce the likelihood that the foam, which is used as insulation material, can entering into critical areas of the connector and terminal interface area of an appliance. Another object of the invention is to simplify the assembly manufacturing process and make the assembly operations easier for the customers.

This object is solved by the subject matter of the independent claims. Advantageous embodiments of the present invention are subject matter of the dependent claims.

The object is achieved by a connector assembly according to claim 1. In accordance to one aspect of the invention, a connector assembly for use in a house appliance, in particular a refrigerator, the assembly configured to be installed on a wall, comprises a main connector body to be introduced into a cut-out hole of said wall along a direction (X1); a protective shell that may be positioned on the inner side of said wall configured to protect the main connector body from insulation foam entering the main connector body when the protective shell and the main connector body are foamed in place. Additionally, the protective shell comprises a receptable formed at a front portion of the protective shell configured to receive the second end of the main connector body; a flange extending from and surrounding the receptacle that may be attached to the wall on the inner side and covering the cut-out hole of said wall; and a lead-through channel formed at a back portion of the protective shell. Additionally, the lead-through channel has internal flaps for routing cables of the connector through the back portion of the shell in a meandering manner, which flaps are inclined with respect to the lead-through channel. This solution is particularly advantageous since it allows to protect the main connector and terminal interface area against insulation foam entering the connector when the shell and the connector are foamed in place preventing the leakage of insulation foam through the cut-hole in the refrigerator wall. A first or front end of the main connector body is positioned on the outer side of the wall and a second or back end of said main connector body is positioned on the inner side of the wall. The outer side of the wall is also called refrigerator side, while the inner side is the foaming side. The protective shell is formed by three pieces. The receptable is structured such as to accommodate the connector. Each of the end portions of said receptable is configured to be connected with different types of connectors. The receptable is then attached to the wall by mean of a flange which will be placed directly in contact and against the wall, providing an additional sealing function. The lead-through channel is formed at a back portion of the protective shell and can incorporate different types of cables, single cables or bundles of cables. Additionally, and most relevantly, the lead-through channel has internal flaps, for routing cables of the connector through the back portion of the shell in a meandering manner, which flaps are inclined with respect to the lead-through channel. The flaps as well as the lead-through channel are designed in such a way to prevent accidental entry of foam, even when the foam fills the space between the walls and raises from the bottom. The foaming is done by putting a pressurized liquid inside between the external metal and plastic refrigerator, which then solidifies. This design is secured against accidental entry of foam in the lead-through tunnel. This construction ensures that the foam does not reach the connector and terminal and solidifies before reaching the lead-through channel. This will later facilitate the maintenance process, of changing the cable because the foams cannot accumulate and solidify around the cables.

According to a further embodiment of the present invention, the protective shell comprises two halves substantially symmetrical around a direction perpendicular to the direction of insertion of the main connector body into a cut-out hole. The protective shell of connector encapsulates the connector. Being made of two halves, the operation of installation and maintenance around the connectors and cables are facilitated. Also, the two substantially symmetrical halves are connected by means of a film hinge and/or complimentary latching elements, so that the shell can be easily opened and closed and the maintenance operations are facilitated. The purpose of the hinge is to hold both the halves together until the assembly with connector.

According to a further improvement, the two substantially symmetrical halves are sealed by an overlapping sealing structure, which can be a prolongation of one of the halves of the shell which overlaps the other half, therefore covering the other half along the conjunction line in which the two halves come in contact. This has the advantage that, improved sealing throughout the entire boundary of the entire junction between two halves is provided.

According to another aspect of the invention, the flange has a concavity which faces the inner side of the wall and is configured to be slightly deflected when in contact with the inner side of the wall so to assure a tight contact with the surface of the wall. This solution is particular advantageous since it enables to install the connector assembly on different types of walls, without the requirement that the walls need necessarily the same thickness or an homogeneous surface. The deformation of the flange portion will balance the possible irregularities on the inner surface of the wall. Therefore, with such a solution a high precision of the wall thickness is not required and cheaper methods for the productions of the wall are allowed to be used. Also, the flange extends from and around the receptable so as to abut against a surface of the wall which is adjacent to the cut-out hole or through hole and so as to provide a seal between the through hole and a region where said second end portion is positioned.

According to another aspect, the flange comprises fastening elements for the attachment of the flange to the wall on the inner side or foaming side, so as to unilaterally cover the cut-hole in the wall from the foaming side while allowing access to the connector through the cut-out hole from the refrigeration side opposite to the foaming side. The fastening elements, are protruding elements adapted to be inserted in more cut-out holes surrounding the cut-out hole receiving the main connector body. A portion of the fastening elements is a straight sliding portion, configured to enable a sliding of the connector assembly through the cut-out hole along that along a direction (X1); and another portion is a locking portion which is positioned on a tip end portion of the protruding element and configured to block the connector assembly in the wall along said first direction. In particular, when the connector is fixed to said wall, the side of the interlocking portion, is configured to abut against the outer side or surface of said wall, which is opposite to the inner side or surface on which the flange portion abuts. This solution is particular advantageous since with said fixing means it enables to guarantee at the same time the conveying and sliding of the mount connector and the fixing of the connector assembly to the wall. The distance between the locking portion and the face of the flange, corresponding to the length of the straight sliding portion, it is designed in such a way that the flange is slightly deflected against the refrigerator's inside wall, so that that a gap free contact with the wall is established, and the system is tight against foam.

According to a further improvement, the fastening elements are integrally provided within that said flange. This assures more stability to the structure, and will assure getting a stable connection between the protective shell and the wall, then sealed by the flange which is surrounding the fastening elements and which is flexible to adapt his shape around the main connector body.

According to another aspect the flange comprises multiple lips on the face of the flange which would abut against the wall after installation. The multiple lips follow the outside profile of the face of the flange, and extend with a rounded profile in the direction of insertion of the connector X1. The lips are configured to be deformed and be compressed against the wall on the foaming side, to assure an uniform contact pressure of the lips against the wall. If the lips would be of rectangular shape, there would be a rigidity in the corners in which the two rectilinear sections of the lip meet. The lower rigidity given by the rounded profile of the lips of the present invention, impairs a reliable, stable and strong sealing between the flange, at the front face of the shell, and the wall.

According to another aspect of the present invention, the flaps in the lead-through channel are inclined of at least 60 degrees, more preferably 70 degrees with respect to the lead-through channel itself. An inclination of the internal flaps formed within a lead-through channel is needed to prevent the liquid foam from flowing through, before it solidifies, so to avoid accumulation of the liquid foam around the cable. The foam has indeed the tendency to solidify. This is especially important towards the back end of the channel. Smaller angles may compromise the proper flow of the foam. Cables leading from the connector are bundled and meander between internal flaps of the shell connecting the front end with a back end of the shell. If the foam would accumulate around the cables, it would be difficult to perform maintenance work.

In one embodiment of the present invention, a suitable cap with a conically narrowing middle section is attached to the back end of the shell. The cap will prevent further entry of foam. The use of the cap and the dimension of it, is based on the number and size of cables. The narrowed portion of the cap basically has a sealing function, as it pressed on the cover of the cables.

According to a further aspect of the present invention, the front end of the shell and the back end of the shell may be arranged at a relative angle comprised between 80 and 100 degrees, more preferable at an angle of 90 degrees. During installation, the lead-through channel provides an orientation for routing the bunched cables and the entire shell assembly can be oriented in such a way that the lead-through channel is facing downwards or is oriented at an angle of ±10 degrees from the vertical line. This orientation provides more effectiveness in preventing the liquid foam from entering the shell. Ideally, the front end of the shell and the back end of the shell may be arranged at a relative angle of 90 degrees.

Said described solution is advantageous since it enables at the same time to provide a seal and to provide an electrical connection between the inside and the outside of the refrigerator. In that way, when a foam is introduced into the inside of the refrigerator for providing an insulation layer during the production process of the refrigerator, said foam is prevented from flowing to the outside of the refrigerator by means of said mount connector. When the term refrigerator is used, it is intended to both fridge and freezer.

The above primary object as well as other objects, features and advantages of the present invention will become readily apparent from the following detailed description which is to be ready in conjunction with the appended drawings.

### BRIEF DESCRIPTION OF THE FIGURES

Further features and advantages will become apparent from the following and more detailed description of the invention as illustrated in the accompanying drawings, in which:
Fig. 1 schematically shows a section view of the connector assembly according to the present invention as shown in Fig. 2 and Fig. 3;
Fig. 2 schematically shows a three dimensional rear view of a connector assembly according to an embodiment of the present invention;
Fig. 3 schematically shows a three dimensional frontal view of a connector assembly according to an embodiment of the present invention;
Fig. 4 schematically shows a three dimensional rear view of the connector assembly according to an embodiment of the present invention in which the connector assembly is going to be mounted on a wall, with the protective shell comprising two symmetrical parts
Fig. 5 schematically shows the two parts of the protective shell and latching system
Figs. 6, 7, 8 schematically show two and three dimensional views of the connector assembly form different perspectives
Fig. 9 schematically shows the wall with a large cut-hole in the middle and smaller cut-holes surrounding the middle one
Fig. 10 schematically shows the outer side of the wall with the one end of main connector body and fastening elements looking out
Fig. 11 schematically shows the front side of the flange with the multiple lips along the flange circumference
Fig. 12 schematically shows the multiple lips abutting against the wall on the foaming side
Fig. 13 schematically shows a three dimensional frontal view of the cap
Fig. 14 schematically shows a portion of the cap
Fig. 15 schematically shows a three dimensional rear view of the connector assembly with the cap incorporated to the end portion
Figs. 16, 17 schematically shows a three and two dimensional frontal views of the protective shell of the connector assembly according to another embodiment of the present invention;

### DETAILED DESCRIPTION OF THE INVENTION

The present invention will now be more fully described hereinafter with reference to the accompanying drawings, in which exemplary embodiments of the invention are shown. The present invention may, however, be embodied in many different forms and should not be construed as limited to the embodiments set forth herein.

Further modifications and variations of the present invention will be clear for the person skilled in the art. The present description is thus to be considered as including all said modifications and/or variations of the present invention, the scope of which is defined by the claims.

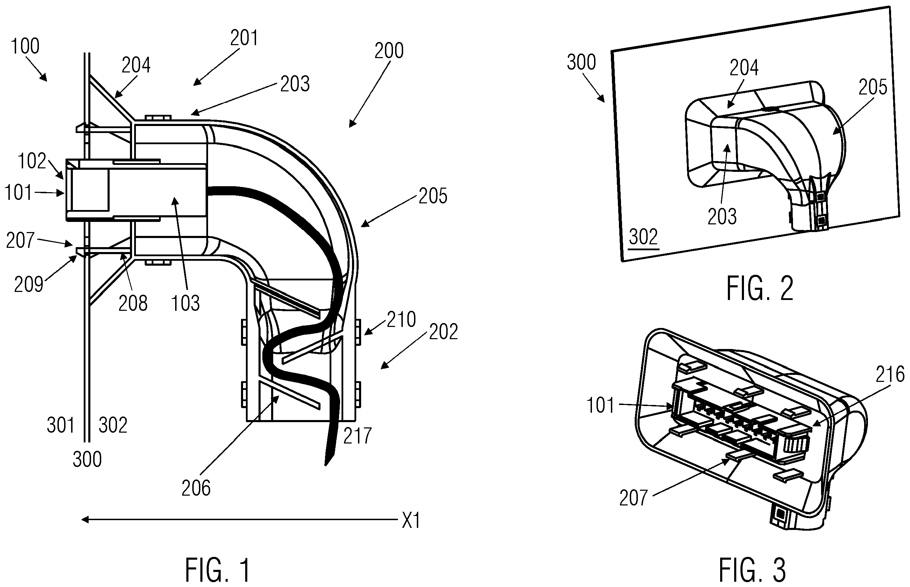

Figure 1 shows the connector assembly 100 according to an embodiment of the present invention. As it will become clearer in the prosecution of the description, the invention relates to a connector assembly 100 which is to be attached to a wall 300, such as the wall of a house appliance, in particular a refrigerator. The wall has an outer side 301, or appliance side, or refrigerator side, and an inner side 302, or foaming side. When an house appliance, in particular a refrigerator, is installed into a wall, a foam is introduced into the inside of the refrigerator for providing an insulation layer.

The connector assembly 100 can be made of different materials, such as for example, Polyamide 66, which has a good slide and wear properties, is electrically insulating, has good wear properties and high strength. As an alternative material, Polypropylene, PBT or other polymers can be used. Considering the flexibility requirement of the latches and the flange, unfilled polymer shall best match the requirement.

The connector assembly 100 comprises a connector 101, which comprises a first portion or first end 102 and a second portion or second end 103. The connector is inserted into a cut hole 303 of the wall by a sliding action along a direction X1. After insertion, the first portion of the connector will look out of the wall 300, on the outer side 301 or refrigerator side, while the second portion 103, will be looking out the other side of the wall 300, on the inner side 302 or foaming side. The connector 101, is configured to accommodate electrical connecting means for providing an electrical contact between the first end portion 101 and the second end portion 102. The connector 101 can for example be a RAST connector, in particular a RAST 2.5 or RAST 5 connector.

Around the connector 101, on the inner side or foaming side 302 of the wall, a protective shell 200 is installed. The protective shell 200 is configured to protect the connector body 101 from the insulation foam flowing during the application. The protective shell 200 has a front portion 201 and a back portion 202.

The protective shell 200 comprises a receptable 203 formed at the front portion 201 and configured to receive the second end 103 of the main connector body 101. The receptable 203 can be obtained of variable dimensions, in dependence of the type of connector which it needs to accommodate and has a substantially rectangular cross section.

Extending from and surrounding the receptable 203, there is a flange 204 which abuts against the inner side 302 of the wall and covers the cut hole 303 of said wall 300.The flange can have different sizes, shapes and can be done with same or different materials, when compared with the receptable 203. For example the flange 204 can be done of a more flexible or elastic material, so to assure adaptability during installation. A flange 204 made of elastic material can easily deform and adapt its shape when pressed between the receptable 203 and the wall 300. On the other side, also a flange 204 can be used which is made of the same material as the receptable 203 and the protective shell 200, to assure having a compact structure minimizing the risk of liquid foam entering within the shell 200 and getting in contact with the main connector body 101. Having the flange 204 of the same plastic material of the receptable 203 and lead-trough channel 205 makes the manufacturability of the protective shell 200 also easier. Preferably the front of the flange has a rectangular shape with rounded corners.

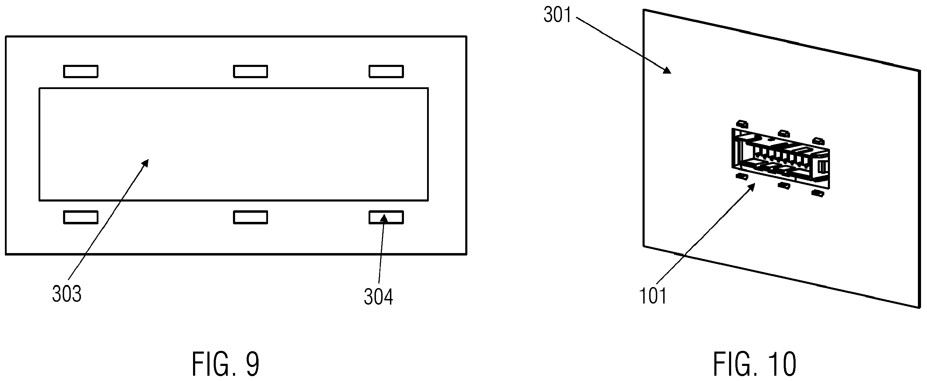

Integrated with the flange 204, there are also fastening elements 207 which extend from the inside of the flange 204 toward the outer side or refrigerator side 301, along a direction parallel to the direction of insertion X1 of the main connector body 101 into the cut-out hole 303. The fastening element 207 can vary in dimension, distribution, shapes and number. The position and the number of fastening elements can be changed arbitrarily. Each fastening element 207 consists of a straight sliding portion 208 and a locking portion 209. In the cross section of figure 1, two fastening elements are represented. The straight sliding portion 208 is an elongated portion extending from the inner front plane 216 or internal wall of the flange 204, positioned within the inner space defined by the flange 204 on the inner side or foaming side 302 of the wall 300, while the locking portion 208 is positioned at the end of the fastening element 207 and protrudes outside the wall 300 on the outer side or refrigerator side 301. As it will become clear from the description of figure 9, the locking portions 209 are pressed or clipped inside cut-holes 304 surrounding the cut-hole 303 accommodating the main connector body 101. Once the fastening elements are clipped in the cut-holes 303, the protective shell is fixed on the wall 300.

On the side of the receptable 203 opposite to that where the flange 204 portion starts, formed at the back portion 202 of the protective shell 200, there is a lead-through channel 205, which has a curved portion and a straight portion, and which has internal flaps 206 which are essential for routing the cables 217 of the connector through the back portion 202 of the shell 200 in a meandering manner, which flaps 206 are inclined with respect to the lead-through channel 205. The lead-through channel 205 contains at least one flap 206, preferably two, more preferable three, but it can contain also a higher numbers of flaps 206. Flaps 206 can be made of the same plastic material of the protective shell 200, or of a different plastic or metallic material. The material of the flaps 206 must be such that it does not create friction with the cable's coating rubber material, so that the cables 217 can be easily pulled out if needed.

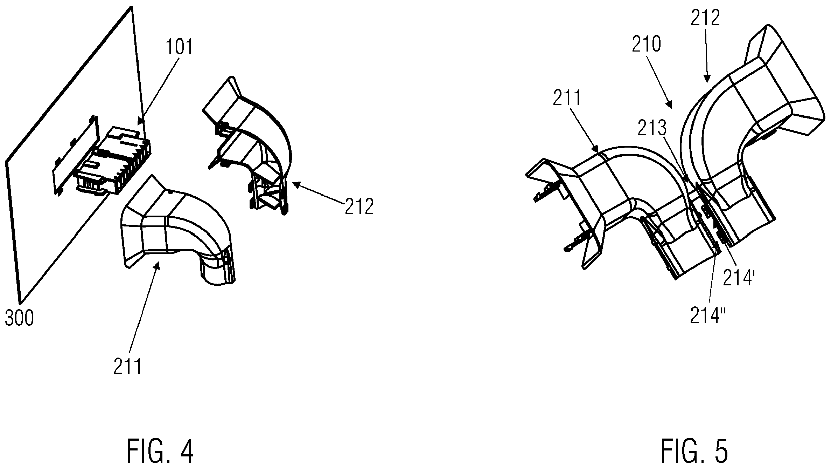

In the section view of figure 1, also latching elements 210 are visible. Those are integral parts of the protective shell 200 and are needed to keep the two halves of the protective shell closed together. The function of the latching elements will become clear from the details of figure 4 and figure 5.

As shown in the figures, the receptable 203, the flange portion 204 with the fastening elements 207, and the lead-through channel 205 are integrally provided.

Figure 2 shows a three dimensional rear view of the protective shell 200 of the connector assembly 100, which is installed on the wall 300. All main elements of the shell 200 are represented, i.e. the receptable 203, the flange 204, the lead-trough channel 205 and the latching elements 210. The dimensions of the protective shell 200 can vary in dependence of the specific use of the connector assembly 100, the dimensions and thickness of the wall 300, the dimensions and shape of the main connector body 101. For example, the protective shell can have a width of about 100 mm, which corresponds to the width of the flange 204, a height of about 70 mm, more preferably 75 mm which is measured from the bottom of the lead-trough channel 205 to the top of the flange 204, and a depth of about 60 mm, more preferable 59 mm, which basically corresponds to the depth of the flange 204, receptable 203 and lead-trough channel 205 together. In figure 2 also the inner side or foaming side 302 of the wall 300 is represented.

Figure 3 schematically shows a three dimensional frontal view of a connector assembly 100, form the front side. The first end 102 of the main connector body 101 is visible and some details of the structure of the flange 204. The back end of the flange 204 is actually closed by a front plane or internal wall 216, which is made of the same shell material, from which the fastening elements 207 extend. In the figure 3, six fastening elements 207 are represented, distributed symmetrically around the main connector body 101. In particular there are three fastening elements on the upper portion of the flange 104, and three on the lower portion of the flange 104, so to have three fastening elements above and three fastening elements below the main connector body 101. The symmetrical distribution will allow an even distribution of the pressure applies to the wall 300 when the connector assembly 100 is installed to the wall 300. What becomes also evident in figure 3 is that each straight sliding portion 208 of the each fastening element 207 has a flat shape and can have a width of around 10 mm, preferably 6 mm and a thickness of about 5 mm, preferably 3 mm. The concavity of the flange 204 facing the connector wall 300 (not represented) also is clearly visible on figure 3.

Figure 4 schematically show a three dimensional rear view of the connector assembly 100 before the installation in the wall 300. As shown in the figure, the connector 101, is installed on the wall 300 by insertion in the main cut-hole 303, and the protective shell 200 in then installed on the connector 101. The shell 200 comprises two symmetrical halves 211 and 212 which are a left and right adaptors and which then get connected and latched together closing the latching elements 210. The latching elements can be film hinges or complimentary latching elements with two counterparts 214' and 214". Once the left and right adaptors 211 and 212 of the shell are connected, the fixing elements 207 of the flange get pushed against the cut-holes 304.

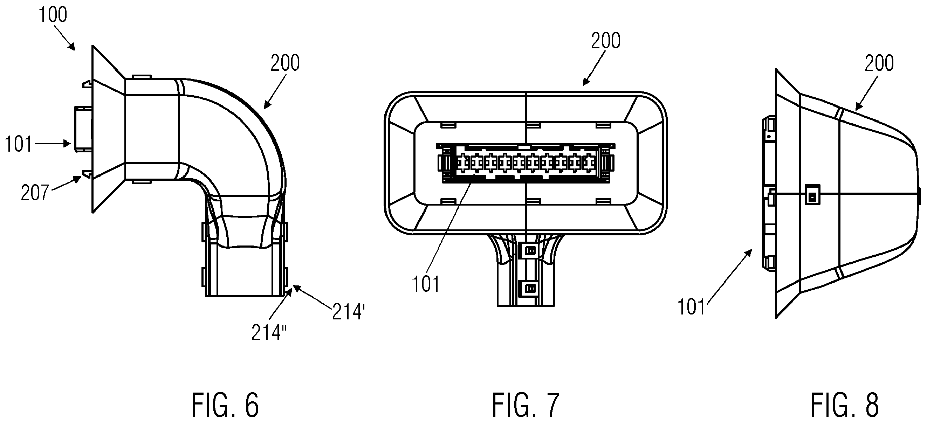

Figure 5 shows the same protective shell 200 of figure 4 viewed from another perspective, with details of the counterparts 214' and 214" of the two latching elements 210. The counterparts 214' and 214" are complementary structured to be pressed one against each other. The part 214' of the latching element has a slot or groove in which the part 214" will be inserted. The protective shell can comprise more elements 214' and 214" along the length as it is visible in FIG 6 to FIG 8. The element 213 serves two purposes. It allows to mold the two symmetrical halves 211 and 212 in the same tool, during the injection molding process, so that the complete shell is manufactured in one tool and one machine. Additionally, the part 213 holds the two symmetrical halves 211 and 212 together from the molding until the assembly stage, so that the person who is assembling the shell 200, does not need to pick two different halves and check for the correct orientation during the assembly process. At a later stage of the assembly process the element 213 can be broken and removed. This greatly helps in improving productivity during assembly of the connector with the protective shell.

Figures 6, 7, 8 are showing the three-dimensional view of the connector assembly 100, from three different perspectives, side, front and top. In the figures 6 and 8 it is well visible that the first end 102 of the main connector body sticks out the flange portion 204 so to be installed in the wall 300 ready to be then connected to the appliance.

Figures 9 represents some details of the appliance or refrigerator wall 300. As previously explained, the main cut-hole 303, suitable to accommodate the connector 101 is in the middle. Above and below that cut-hole 303, symmetrically distributed, are the smaller cut-holes 304, suitable to accommodate the fastening elements 207 protruding from the flange 204 internal wall. Referring to the figure, the large cut-hole 303 is 70 mm ± 1 mm wide and 20 mm ± 1 mm high and can accommodate the connector assembly 100 of figure 2. Those dimensions are just provided as an example. The cut-holes can have various dimensions, based on the size of the connector which it needs to accommodate. The width can be comprised between 20 mm and 100 mm, preferably 50 mm and 100 mm. The height can be comprised between 5 mm and 50 mm, preferably 10 mm and 30 mm.

The figure 9 also shows three smaller cut-holes 304 above the large cut-hole 303 and three smaller cut-holes 304 below the large cut-hole 303. All small cut-holes must have the same size, to be suitable for the insertion of the fastening elements 207. In this specific example, each cut-hole has a width of 6 mm ± 0.5 mm and a height of 2 mm ± 0.1 mm.

The position of the small cut-holes 304 is defined in relation to the large cut-hole 303. The three top cut-holes 304 which are above the large cut-hole 303 are positioned at a distance of 12 mm ± 1 mm from the middle line (a) of large cut-hole 303 parallel to the direction X1 of insertion of connector 101, and the three bottom cut-holes 304 are positioned symmetrically in respect to the top ones. Looking at the middle line (b) of the large cut hole perpendicular to the line (a) and to the direction X1, the left top and bottom small cut-holed 304 are located at a distance of 24.5 mm ± 1 mm from the middle line (b) and the right top and bottom small cut-holed 304 are located at a distance of 30.5 mm ± 1 mm from the middle line (b) and the central top and bottom small cut-holed 304 are next to the middle line (b) and extending toward the cut-holes on the right.

All the dimensions provided have been provided just as examples, and can vary within a certain range.

Figure 10 shows the outer side of the wall or refrigerator side 301 with the first end 102 of the connector body 101 and the fastening elements 207 inserted in the wall 300.

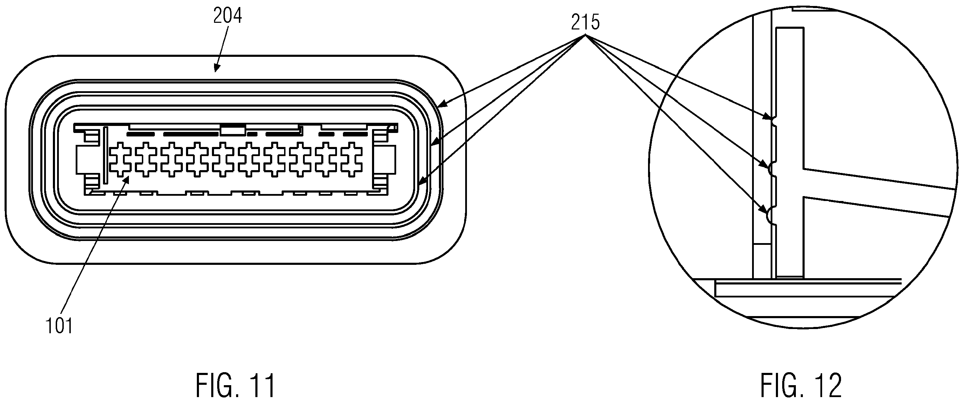

Figure 11 shows the front face of the flange 204 in which are visible three lips or rings 215 following the outside profile rectangular, rounded in the corners, of the face of the flange 204. The lips 215 extend with a rounded profile in the direction of insertion of the connector X1. Looking at figure 11 there is a distance of about 1 cm between each circumferential lips or ring 215 and the following one. But the distance can vary and be settled according to the size of the flange 204 and type of wall 300. There can be a distance comprised between 3 mm and 20 mm, preferably between 5 mm and 10 mm. More irregular walls may require a flange 204 with more rings 215 closer to each other to better adapt to the irregularity of the wall's foaming side 302. The lips 215 are indeed configured to be deformed and be compressed against the wall 300 on the foaming side 302 to assure an uniform contact pressure of the lips 215 against the wall 300.The boarders of the lips 215 follow the same shape of the flange 204 outer circumference, being rounded on the corners. This helps to minimize a rigidity in the corners in which more sections of the lip 215 meet if those section would be rectilinear such as in a lip 215 of rectangular shape. The lower rigidity given on the rounded corners of the lips 215 of the present invention, impairs a reliable, stable and strong sealing between the flange 204, at the front face of the shell 200, and the wall 300.

Figure 12 shows a cross section of the flange 204 and lips 215 abutting against the wall 300. Each lip 215 has a rounded profile, which is suitable to be pressed against the wall, therefore protecting the flange 204 and the wall 300 surfaces from rubbing against each other.

The lips or rings 215 are made of the same material as the protective shell.

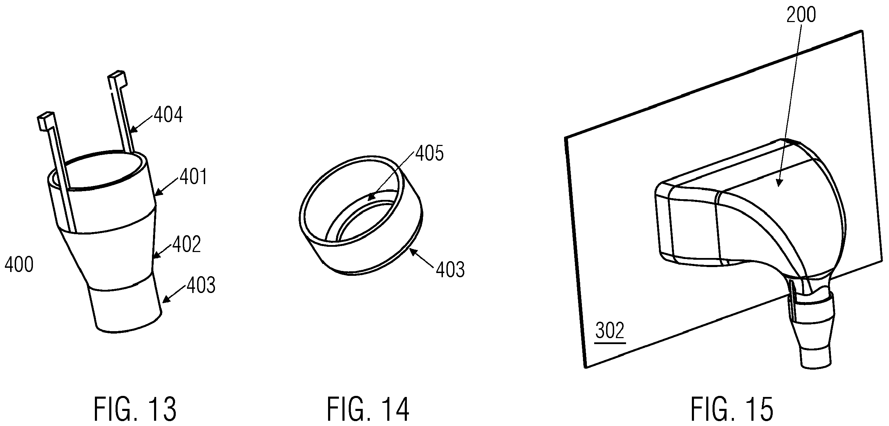

Figure 13 and 14 schematically shows a three dimensional frontal view of the cap 400 and a portion of the cap 403. The cap 500 is configured to be connected to the back portion of the protective shell 200.

As shown in figure 13 the cap 400 consists out of three sections, two cylindrical sections 401 and 403 with a conically narrowing middle section 402 connecting the two cylindrical sections 401 and 403. The two cylindrical portions 401 and 403 have different diameter. The portion 401 with larger diameter is on one side directly connected to the protective shell 200, and on the other side connected to the middle conical portion which tapers towards the section 403 having a narrowed diameter. The cap 400 is first inserted by sliding over the back portion of the protective shell 200 and then fixed to the shell 200 by means of two or more fastening elements 404. The fastening elements or latches are flexible elements, protruding from the portion 401, comprising straight segments and hooks portions position at the tip of the segments. The elements can bend along a direction that is perpendicular to the insertion direction before connecting to the shell 200, to facilitate the mounting of the cap 500 on the shell 200. Or the elements 404 can be configured to slide along the insertion direction over the shell 200. The hooks of the fastening elements are configured to lock with counterpart elements located on the surface of the back portion 202 of the protective shell 200. The cap 400 will incorporate the cables 217 coming out the protective shell 200 and because of the tapered shape, it will hold the cables 217 together. The cap 400 may even have a further protective function, as it further prevents entry of the foam, and sealing function. The portion 403 of the cap 400, has at his bottom part an annular collar 405 protruding towards the inside, which has a smaller diameter of the portion 403. The annular collar 405 function as sealing element against the cables 217, sealing the overall connector assembly 100 from the space outside, so to protect the connector 101 and related electrical connections.

Figure 15 schematically shows a three dimensional rear view of the connector assembly 100 with the cap 400 attached to the end of the back portion 202.

While the present invention has been described with reference to the embodiments described above, it is clear for the skilled person that it is possible to realize several modifications, variations and improvements of the present invention in the light of the teaching described above and within the ambit of the enclosed claims without departing from the scope of protection of the invention.

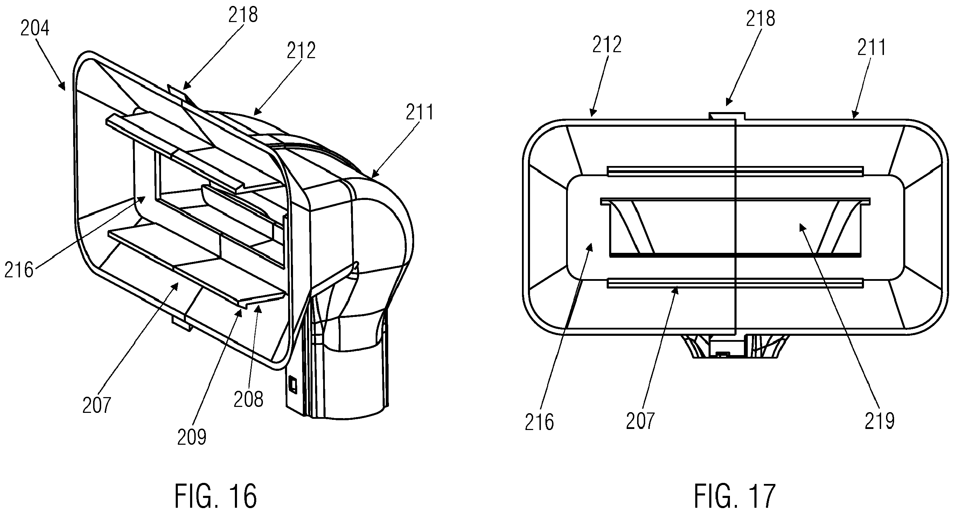

Figure 16 schematically show a three dimensional front view of the protective shell 200 of the connector assembly 100 according to another embodiment of the present invention. In particular in this case only two fastening elements 207 are provided, one on the upper portion of the flange 104, one on the lower portion, so to have one fastening element above and one fastening element below the main connector body 101. Each of the fastening element 207 is replacing multiple fastening elements, has a sliding portion 208 which is a planar surface extending along the width of the front plane or internal wall 216 of the flange and a locking portion 209 on its end. In this case, the smaller cut holes 304 shown in figure 9 can also be made as continuous slit, to accommodate the fastening element 207 that is continuous in length for better strength.

This will help the locking elements to bear the load of the entire assembly with the hanging mass of the wires.

Figure 16 also shows an overlapping sealing structure 218 which seals the two substantially symmetrical halves of the protective shell along the conjunction line. The sealing structure 218 can be an additional external structure, or preferably consists out of an prolongation of one of the two halves of the shell, so that basically one half will overlap on the other half.

Figure 17 is a two dimensional front view of the connector protective shell 200 of the connector assembly 100 according this last embodiment of the present invention and showing additionally the geometry to the front plane or internal wall 216 and one example of recommended cut out 219 for the connector in the front plane 216.

For example even if only RAST 2.5 and RAST 5 connectors have been described, it is evident that the present invention can be used with any type of connector.

Accordingly the invention is not to be limited by the specific illustrative embodiments, but only by the scope of the appended claims.

## Claims

1. Connector assembly (100) for use in house appliance applications configured to be installed on a wall (300) having an outer side (301) and an inner side (302) opposite to that outer side (301) comprising:
a main connector body (101) that may be introduced into a cut-out hole (303) of said wall (300) along a direction (X1);
a protective shell (200) that may be positioned on the inner side (302) of said wall (300) configured to protect the main connector body (101) from insulation foam entering the main connector body (101) when the protective shell (200) and the main connector body (101) are foamed in place, comprising
a receptable (203) formed at a front portion (201) of the protective shell (200) configured to receive the second end (103) of the main connector body (101);
a flange (204) extending from and surrounding the receptacle (203) that may be attached to the wall on the inner side (302) for covering the cut-out hole (303) of said wall (300);
a lead-through channel (205) formed at a back portion (202) of the protective shell (200) ;
wherein the lead-through channel (205) has one or more internal flaps (206) for routing cables (217) of the connector through the back portion (202) of the shell (200) in a meandering manner, which one or more flaps (206) are inclined with respect to the lead-through channel (205).

2. Connector assembly (100) according to claim 1, wherein the protective shell (200) comprises two halves (211, 212) substantially symmetrical around a direction (Y1) perpendicular to the direction (X1).

3. Connector assembly (100) according to claim 2, wherein the two substantially symmetrical halves (211, 212) are connected by means of a film hinge and/or complimentary latching elements (214', 214").

4. Connector assembly (100) according to claim 1 to 3, wherein the two substantially symmetrical halves (211, 212) are sealed by an overlapping sealing structure (218).

5. Connector assembly (100) according to claim 1 to 4, wherein the flange (204) has a concavity which faces the inner side of the wall and is configured to be deformed when in contact with the inner side of the wall.

6. Connector assembly (100) according to claim 1 to 5, wherein the flange (204) comprises at least two fastening elements (207) suitable for attaching the flange (204) to the wall (300) to unilaterally cover the cut-out hole (303) of said the wall (300).

7. Connector assembly (100) according to claim 6, wherein the fastening elements (207) are protruding elements (207) adapted to be inserted in more cut-out holes (304) surrounding the cut-out hole (303) receiving the main connector body (101).

8. Connector assembly (100) according to claim 6 to 7, wherein the fastening elements (207) are integrally provided within that said flange (204).

9. Connector assembly (100) according to claim 1 to 8, wherein the flange (204) comprises multiple lips (215) extending with a rounded profile along the direction (X1).

10. Connector assembly (100) according to claim 1 to 9, wherein the flaps (206) in the lead-through channel (205) are inclined of at least 60 degrees with respect to the lead-through channel (205) itself.

11. Connector assembly (100) according to claim 1 to 10, wherein a suitable cap (400) with a conically narrowing middle section (402) is attached to the back end (202) of the shell (200).

12. Connector assembly (100) according to claim 1 to 11, wherein the front end (201) of the shell (200) and the back end (202) of the shell (200) may be arranged at a relative angle comprised between 80 and 100 degrees.

13. Connector assembly (100) according to claim 12, wherein the front end (201) of the shell (200) and the back end (202) of the shell (200) may be arranged at a relative angle of 90 degrees.

14. Connector assembly (100) according to claim 13 for use in refrigerators applications.
